# EUROPEAN PATENT APPLICATION

(11) **EP 4 670 807 A1**
(43) Date of publication of application: **31.12.2025**
(21) Application number: 25184823.0
(22) Date of filing: 24.06.2025
(51) Int. Cl.: A63F 13/22, A63F 13/23, A63F 13/42, A63F 13/80

(54) **CONTROLLER INPUT PAIRING AND MAPPING**

(30) Priority: 26.06.2024 US 202463664425 P; 10.06.2025 US 202519234077
(71) Applicant: Zwift, Inc., Long Beach, CA 90082 (US)
(72) Inventor: VANHOUTTE, Ferenc George, London (GB); ANDREESCU, Alexandru-Bogdan, London (GB)
(74) Representative: Horler, Philip John

(57) **Abstract**

There is disclosed a system and a method of pairing and mapping an input device with a game client software. The method comprises an input device transmitting one or more bitmaps identifying analog and digital input schemes for the input device. The game client software, thereafter, can respond to inputs from the input device in the form identified by the one or more bitmaps.

## Description

A portion of the disclosure of this patent document contains material which is subject to copyright protection. This patent document may show and/or describe matter which is or may become trade dress of the owner. The copyright and trade dress owner has no objection to the facsimile reproduction by anyone of the patent disclosure as it appears in the Patent and Trademark Office patent files or records but otherwise reserves all copyright and trade dress rights whatsoever.

### RELATED APPLICATION INFORMATION

This patent claims priority from U.S. Provisional Patent Application Number 63/664,425, titled, CONTROLLER INPUT PAIRING AND MAPPING, filed June 26, 2024, and from US Patent Application Number 19/234,077, titled CONTROLLER INPUT PAIRING AND MAPPING, filed June 10, 2025.

### BACKGROUND

### Field

This disclosure relates to communications protocols and, more particularly to a protocol for pairing input devices and mapping inputs from those input devices to associated hardware or software.

### Description of the Related Art

Over the last several, years, the gamification of exercise and the integration of social networks or network effects more generally with sports has become commonplace. Companies like Peloton^{®} have known that adding the ability of cyclists to compete against one another in a virtual spinning class is more likely to increase engagement, keep exercisers engaged and returning, and to enable individuals to be better-equipped to reach their fitness goals.

In a similar space, Zwift^{®} has offered its customers the ability to go on "road" style races within a virtual environment along that customer's friends. The resulting experience has been a hit. Players arrange to meet up with one another to practice, ride, and even compete in races. Players may interact with each other both in and outside of the game. Zwift offers a social networking component and feeds a traditional trait of many cyclists: competitiveness. That players can see each other's progress, compare statistics, and engage in side-by-side races with athletes hundreds or thousands of miles away offers a unique set of experiences that Zwift's customers enjoy.

Zwift includes a virtual game world in which players interact with other players. Players can move through the virtual world, exercising as they go, with their digital avatar representing their position and exercise effort within that world. Some virtual game systems rely upon video classes with instructors in the form of rowing instruction, spinning instruction, weight training, and the like. Typically, these experiences are shown on a display in front of the exercising individual.

To enable Zwift and other, similar, exercise systems to function and ensure a relative uniformity of experiences for its riders, Zwift may be reliant upon so-called "trainers." Trainers are devices that apply resistance to purpose-mounted outdoor cycles or to purpose-built indoor cycles. Typically, a trainer will replace the back wheel of a traditional, outdoor bicycle. In some cases, a trainer will rely upon a roller engaging with a back wheel of a traditional, outdoor bicycle. A trainer is distinguished from an indoor cycle in that it is designed to be mounted to any number of outdoor cycles to thereby create a resistance bicycle where previously there was only a traditional two-wheeled, outdoor bicycle. When the word "trainer" is used herein, a so-called "smart" trainer is intended - meaning a trainer that can vary its resistance as directed by software operating on a computing device in communication with that trainer - unless otherwise stated.

Increasingly, Zwift is also operable with purpose-built indoor cycles that are, in essence, trainers permanently (or temporarily) mounted on a "bicycle" (which may or may not have two wheels and may or may not be designed to ever be used to move from location to location) and which is specifically designed for the integration of a resistance device. Zwift and other software systems can function in much the same way with other variable, computer-controlled resistance exercise systems. These can include rowing machines, treadmills (though this is not usually resistance, it is typically speed and incline adjustment), resistance weight machines, and traditional indoor cycles. Any exercise device that operates using software-controlled resistance or variable speed could be controlled using the protocol described herein.

In addition, manufacturers are increasingly adding functionality to these rides. Most riders use a fan, primarily simply to keep themselves cool. Riding can be intense. But, there are fans that simulate the speed at which a rider is moving in an exercise. Likewise, there are front-mounted devices that raise and lower the front of a mounted bicycle to simulate going up and down hills. Still other devices simulate "lean" as a rider leans into a turn to try and better simulate the virtual environment. Shifting gears is common in cycling, downshifting to go up hills and upshifting to go down. Increasingly, indoor cycles and trainer-mounted cycles incorporate shifters, both wireless and physically connected by wires. Rowing machines can simulate currents or rougher waters. Treadmills can incline or decline to simulate road conditions.

One element that is relevant here is that the system utilizes software to control resistance or speed or other characteristics. In some of those cases, the same company controls the entire system (e.g. Peloton). However, in other cases the software must be designed to be able to communicate with various exercise devices which may be connected to the software. In such a case, a uniform communication protocol may be advisable. Bluetooth^{®} low energy protocol exists and enables energy-efficient data transmission, but its capabilities are limited. Likewise, FTMS (Fitness Machine Service) protocol is available. However, its capabilities are also limited as it was designed some time ago and the numerous elements set forth above (e.g. incline or lean or shifting) were not expected and thus are not capable. It would be beneficial if there were a protocol designed with present software-controlled exercise in mind and with the option for expandability in the future. It would be beneficial if the protocol would reduce overall latency, while being more robust, and conserving computing power. It would likewise be beneficial if the software device could operate as a central communication hub through which all connected devices communicate.

With the introduction of new communications protocols for connecting exercise devices, software, and associated controllers or peripheral systems, a need exists for a quick and robust system for enabling devices to pair and communicate with one another. In particular, input devices that offer controls to a user to alter aspects of the exercise and/or associated game client software may be highly-varied. The game client software and/or trainer devices and other exercise devices that may interact with various input devices may be able to interact with and receive input from numerous input devices and input device types. As a result, the game client software and exercise devices may not be able to clearly expect that input be in a given form. There may be a default, expected input form for an input device designed for use with a particular game client software and/or exercise device. But for other or unusual input devices, a system for pairing those input devices and intelligently passing information regarding available inputs from the input device and those input's associated functions and capabilities to the game client software and/or exercise device is desirable.

### DESCRIPTION OF THE DRAWINGS

FIG. 1 is an overview of an exercise device communications system.
FIG. 2 is a functional diagram of an exercise device communications system.
FIG. 3 is a functional diagram of a computing device.
FIG. 4 is an example of an exercise device.
FIG. 5 is an example of a set of handheld controllers.
FIG. 6 is flowchart of a process of performing input device pairing and input mapping.
FIG. 7 is an example of a set of data structures used in pairing and input mapping.
FIG. 8 is a flowchart for a process of handshaking and processing to input device input.
FIG. 9 is flowchart of a process of performing pairing of an input device for use in conjunction with game device.

Throughout this description, elements appearing in figures are assigned three-digit reference designators, where the most significant digit is the figure number where the element is first introduced and the two least significant digits are specific to the element. An element that is not described in conjunction with a figure may be presumed to have the same characteristics and function as a previously described element having the same reference designator.

### ASPECTS OF THE DISCLOSURE

Non-limiting aspects of the disclosure are set out in the following non-limiting clauses:
**1.** A method of pairing an input device for use in conjunction with game device, wherein the input device comprises one or more input means and is configured to output, when one of the input means is actuated, a user input command corresponding to the actuated input means and the game device being responsive to one or more game commands, wherein the method comprises: the input device and the game device establishing communication with each other; the game device attempting to obtain input mapping information from the input device using predefined location information; the game device using as selected mapping information: if the game device attempting to obtain input mapping information is successful, the obtained input mapping information; and if the game device attempting to obtain input mapping information is unsuccessful, predefined mapping information; the game device receiving a first user input command from the input device; and responsive to receiving the first user input command, the game device mapping, using the selected mapping information, the first user input command with a first game command of the one or more game commands.
   Techniques of this disclosure can help reduce the messaging between the input device, e.g., game or fitness controller, and the game device (or simply "game") and can also help the game support a greater range of devices, including less sophisticated and/or more low-cost devices which may not have a complex configuration input or mapping configuration, if any at all. Input devices such as controller often have a mandated format and the present techniques enable the game to support a much greater range of input devices. It will also be appreciated that, if the input device has mapping configuration only for some of the input means and/or for some of the associated game commands, the game may use the mapping information that is available and may use the default mapping information for other input means or game commands mapping.
   The predefined location may be a predefined path for the game to look for mapping configuration once a communication is established with the input device. If no configuration is found, the game will use a default configuration such that devices with no configuration or no compatible configuration (e.g. not stored in the predefined location) will still be able to interact with the game. On the other hand, more advanced input devices which may have a range of inputs, including digital and/or analog inputs are likely to result in unexpected behaviour when connecting to the game due to different input devices having different inputs means and mapping to user input commands.
   The establishment of the communication may in some cases initiated by the game while in other cases it may be initiated by the input device.
2. The method of clause 1, wherein the input mapping information comprises digital mapping information indicative of digital input means supported by the input device.
**3.** The method of clause 2 where the digital mapping information comprises a digital bitmap, the digital bitmap mapping the digital input means supported by the input device with digital user input commands.
**4.** The method any one of clauses 1 to 3, wherein the input mapping information comprises analog mapping information indicative of analog digital input means supported by the input device.
**5.** The method of clause 4 wherein the analog mapping information comprises an analog bitmap, the analog bitmap mapping the analog input means supported by the input device with analog user input commands.
**6.** The method of clause 4 or clause 5, wherein the analog mapping information comprises at least one of a minimum value, maximum value and an input deadzone range for the input means.
**7.** The method of clause 6 further comprising the game device doing one or both of: mapping a minimum value of a user input command with a minimum value of a corresponding game command; and mapping a maximum value of a user input command with a maximum value of a corresponding game command.
   For example, the mapping information may provide a range for analog input means. If a first input means has for example a [x₀, x₁] range of values when actuated, the game can use this information to appropriately scale the input to correspond to a game command, which may be a different range. This can also enable the game to behave in a consistent manner across a wide range of controllers which have different input means with different respective configurations.
**8.** The method of clause 6 or clause 7, wherein the input deadzone range comprise a one-dimensional range of inputs or a n-dimensional zone of inputs, with n equal to or greater than two; and wherein a user input command within the input deadzone range will be discarded.
   The zone of inputs are not necessarily a square-shaped area. They may be circular, oval, rectangular or other shapes.
   For example, it will not trigger a user input command being output by the input device.
**9.** The method of any one of clauses 6 to 8 further comprising the input device detecting an actuation of one of the input means; the input device determining whether a second user input command is within the input deadzone range, the second user input command corresponding to the actuation of the one of the input means; upon determining that the second user input command is within the input deadzone range, the input device discarding the second user input command; upon determining that the second user input command is outside of the input deadzone range, the input device outputting the second user input command to the game device.
**10.** The method of any one of clauses 6 to 9, further comprising: the game device selecting an alternative input deadzone range for the input device; the game device transmitting the alternative input deadzone range to the input device; and the input device updating the input deadzone range to the alternative deadzone range.
**11.** The method of any one of clauses 6 to 10, further comprising: the game device comparing a game deadzone range with the input deadzone range; the game device making a determination that at least one user input command falls outside of the input deadzone range and inside the game deadzone range; the game device, upon making the determination, sending the input device an updated input deadzone range; the input device receiving the updated input deadzone range; and the input device updating the input mapping information based on the updated input deadzone range.
   For example, the game device may identify that the input deadzone from the input device (e.g., received when using the predefined location information) is too narrow and can be expanded. The game may then determine a suitable new deadzone configuration and share this with the input device. The input device may then update its configuration so that it only outputs user input commands when the user actuates the input means outside of its updated deadzone. This can also help reduce messaging between the game and input device, saving energy and reducing power consumption at the same time.
**12.** The method of any preceding clause where the input mapping information comprises a bitmap, the bitmap mapping input means supported by the input device with corresponding user input commands.
**13.** The method of any preceding clause where the input device and the game device establishing communication with each other comprises the game device acting as a client and connecting to the input device, the input device acting as a server.
   The skilled person will appreciate that the techniques disclosed in the present disclosure can be applied equally to the corresponding method steps for each of the game device and input device individually, as well as to the corresponding system, game device and input device and to computer programs configured to implement these system, game device or input device methods.
14. A method of pairing an input device for use in conjunction with game client software, the method comprising: the input device establishing communication with the game client software; the input device providing a first bitmap identifying inputs supported by the input device to the game client software; and the input device transmitting input to the game client software in the form identified by the first bitmap.
   In some cases, the client software reads or pulls the first bitmap from the input device. For example, for the communications, such as of the first bitmap, between the input and client devices (e.g., the client/server setup) the client software may be doing the initiating of, and/or the reading of, the bitmap, or more generally of the mapping information. The controller may not initiate the transmission and may let the game (client) try to read the data in the expected location for it to be stored. If the game (client software)finds it, it will use it. Otherwise, the game will use the default configuration.
15. The method of clause 14 wherein the first bitmap identifies digital inputs supported by the input device to the game client software and further comprising: the input device providing a second bitmap identifying analog inputs supported by the input device to the game client software.
   In some cases, the client software reads or pulls the second bitmap from the input device. For example, for the communications, such as of the second bitmap, between the input and client devices (e.g., the client/server setup) the client software may be doing the initiating of, and the reading of, the bitmap. The controller may not initiate the transmission and may let the game (client) try to read the data in the expected location for it to be stored. If the game (client software) finds it, it will use it. Otherwise, the game will use the default configuration.
16. The method of clause 15 further comprising the input device identifying capabilities of each of the analog inputs identified by the second bitmap to the game client software.
17. The method of clause 16 wherein the capabilities are minimum and maximum range values for input from the analog inputs.
18. The method of any one of clauses 16-17 further comprising the input device identifying a deadzone value above or below which triggering events will take place for one of the analog inputs.
19. The method of any one of clauses 15-18 further comprising the game client software, based on the second bitmap, doing at least one of: identifying bits that should be considered input from the input device and bits that should not be considered input from the input device; setting the minimum and maximum range values at which an analog input will be detected; and processing the deadzone value to minimize communication between the game client software and the input device.
   In some cases, steps 650, 837 and/or 840 or may include processing the deadzone value or values to minimize communication between the game client software and the input device. This processing may be updating the input device to reduce the amount of messaging. For example, with the inclusion of the deadzones parameter a client (after reading the zone(s) from the server) could set a higher value (e.g., a wider or greater deadzone) in line with the limits used by the client. By setting this zone the server will not send a notification until that threshold was reached. Using this a client could prevent the server sending messages that would be dropped/ignored by the client. The message/notification structure does not change by setting the deadzone value, but it does change the trigger when the message might be sent by the Server.
20. The method of any one of clauses 15-19 wherein when the first or the second bitmap do not identify one or more digital or analog inputs, the game client software relies upon a default setting for a particular input.
   This may be a game/client feature in an input device/server clause.
   The present disclosure also provides a computer program configured to cause an input device to perform the method of any of clauses 14-20, when executed on one or more processors of the input device.
21. An input device, comprising a processor and memory for executing a pairing process with game client software, the input device is configured to: establish communication with the game client software; provide a first bitmap identifying inputs supported by the controller to the game client software; and transmit input to the game client software in the form identified by the first bitmap.
22. The input device of clause 21 wherein the first bitmap identifies digital inputs supported by the input device to the game client software and further wherein the input device: provides a second bitmap identifying analog inputs supported by the input device to the game client software.
23. The input device of clause 22 wherein the input device further identifies capabilities of each of the analog inputs identified by the second bitmap to the game client software.
**24.** The input device of clause 23 wherein the capabilities are minimum and maximum range values for input from the analog inputs.
**25.** The input device of any of clauses 23-24 wherein the input device further identifies deadzone values above and below which triggering events will take place for each of the analog inputs.
**26.** The input device of any one of clauses 22-25 wherein the input device is further configured to do at least one of: transmit bits within a range of supported analog input bits that should not be considered input from the input device; transmit analog input bits within minimum and maximum range values at which an analog input will be detected by the game client software; and ignore deadzone values to minimize communication between the input device and the game client software.
**27.** The input device of any one of clauses 22 to 26 wherein when the first or the second bitmap do not identify one or more digital or analog inputs, the input device and the game client software rely upon a default setting for a particular input.
   This may be a game/client feature in an input device/server clause.
**28.** A system comprising a computing device operating as a server using server software, the server software executing instructions to cause the processor to: establish communication with game client software; provide a first bitmap identifying inputs supported by the input device to the game client software; and transmit input to the game client software in the form identified by the first bitmap.
**29.** The system of clause 28 wherein the first bitmap identifies digital inputs supported by the input device to the game client software and the instructions further cause the processor to: provide a second bitmap identifying analog inputs supported by the input device to the game client software.
**30.** The system of clause 29 wherein the instructions further cause the processor to identify capabilities of each of the analog inputs identified by the second bitmap to the game client software.
**31.** The system of clause 30 wherein the capabilities are minimum and maximum range values for input from the analog inputs.
**32.** The system of any one of clauses 30-31 wherein the instructions further cause the processor to identify deadzone values above and below which triggering events will take place for each of the analog inputs.
**33.** The system of any one of clauses 29-32 wherein the instructions further cause the processor to, at least one of: transmit bits within a range of supported analog input bits that should not be considered input from the input device; transmit analog input bits within minimum and maximum range values at which an analog input will be detected by the game client software; and ignore deadzone values to minimize communication between the input device and the game client software.
**34.** A method of pairing an input device for use in conjunction with game client software, the method comprising: the input device establishing communication with the game client software; the input device providing a first bitmap identifying digital inputs supported by the input device to the game client software; an input device providing a second bitmap identifying analog inputs supported by the input device to the game client software; and the input device transmitting input to the game client software in the form identified by the first and second bitmaps.
**35.** The method of clause 34 further comprising the input device identifying capabilities of each of the analog inputs identified by the second bitmap to the game client software.
**36.** The method of clause 35 wherein the capabilities are minimum and maximum range values for input from the analog inputs.
**37.** The method of any one of clauses 35-36 further comprising the input device identifying deadzone values above and below which triggering events will take place for each of the analog inputs.
**38.** The method of any one of clauses 35-37 further comprising the game client softwaredoing at least one of: identifying bits that should be considered input from the input device and bits that should not be considered input from the input device; setting the minimum and maximum range values at which an analog input will be detected; and processing the deadzone values to minimize communication between the game client software and the input device.
**39.** The method of any one of clauses 35-38 wherein when the first or the second bitmap do not identify one or more digital or analog inputs, the game client software relies upon a default setting for a particular input.
   The present disclosure also provides a computer program configured to cause an input device to perform the method of any of clauses 34-39, when executed on one or more processors of the input device.
**40.** An input device, comprising a processor and memory for executing a pairing process with game client software, the input device: establishes communication with the game client software; provides a first bitmap identifying digital inputs supported by the controller to the game client software; provides a second bitmap identifying analog inputs supported by the input device to the game client software; and transmits input to the game client software in the form identified by the first and second bitmaps.
**41.** The input device of clause 40 wherein the first bitmap identifies digital inputs supported by the input device to the game client software and further wherein the input device: provides a second bitmap identifying analog inputs supported by the input device to the game client software.
**42.** The input device of clause 41 wherein the input device further identifies capabilities of each of the analog inputs identified by the second bitmap to the game client software.
**43.** The input device of clause 42 wherein the capabilities are minimum and maximum range values for input from the analog inputs.
**44.** The input device of any of clauses 42-43 wherein the input device further identifies deadzone values above and below which triggering events will take place for each of the analog inputs.
**45.** The input device of any one of clauses 42-44 wherein the input device further: transmits bits within a range of supported analog input bits that should not be considered input from the input device; transmits analog input bits within minimum and maximum range values at which an analog input will be detected by the game client software; and ignores deadzone values to minimize communication between the input device and the game client software.
**46.** The input device of any one of clauses 42-45 wherein when the first or the second bitmap do not identify one or more digital or analog inputs, the input device and game client software rely upon a default setting for a particular input.
**47.** A system comprising a computing device operating as a server using server software, the server software executing instructions to cause the processor to: establish communication with game client software; provide a first bitmap identifying digital inputs supported by the input device to the game client software; provide a second bitmap identifying analog inputs supported by the input device to the game client software; and transmit input to the game client software in the form identified by the first and second bitmaps.
**48.** The system of clause 47 wherein the first bitmap identifies digital inputs supported by the input device to the game client software and the instructions further cause the processor to: provide a second bitmap identifying analog inputs supported by the input device to the game client software.
**49.** The system of clause 48 wherein the instructions further cause the processor to identify capabilities of each of the analog inputs identified by the second bitmap to the game client software.
**50.** The system of clause 49 wherein the capabilities are minimum and maximum range values for input from the analog inputs.
**51.** The system of any one of clauses 49-50 wherein the instructions further cause the processor to identify deadzone values above and below which triggering events will take place for each of the analog inputs.
**52.** The system of any one of clauses 47-51 wherein the instructions further cause the processor to: transmit bits within a range of supported analog input bits that should not be considered input from the input device; transmit analog input bits within minimum and maximum range values at which an analog input will be detected by the game client software; and ignore deadzone values to minimize communication between the input device and the game client software.
**53.** A method of pairing an input device for use in conjunction with game client software, the method comprising: the input device establishing communication with the game client software; the input device providing a first bitmap identifying digital inputs supported by the input device to the game client software; the input device providing a second bitmap identifying analog inputs supported by the input device to the game client software; and the input device transmitting input to the game client software in the form identified by the first bitmap.
**54.** The method of clause 53 further comprising: the input device providing capabilities of each of the analog inputs identified by the second bitmap to the game client software, wherein the capabilities are minimum and maximum range values for input from the analog inputs; and the input device identifying deadzone values above and below which triggering events will take place for each of the analog inputs to the game client software.
**55.** The method of any one of clauses 53-54 further comprising: the game client software designating digital inputs identified as supported by the input device as available for input and digital inputs not identified as supported by the input device as unavailable; the game client software designating analog inputs identified as supported by the input device as available for input and analog inputs not identified as supported by the input device as unavailable; and the game client software altering an aspect of the game client software in response to receipt of digital and analog inputs identified as supported by the input device.
**56.** The method of any one of clauses 53-55 further comprising one of: the game client software altering an aspect of the game client software according to a default setting upon receipt of digital or analog inputs not identified as supported or unsupported by the input device; or the game client software altering an aspect of the game client software according to a default setting upon receipt of digital or analog inputs not identified as configured or mapped by the input device.
**57.** The method of any one of clauses 53-55 further comprising: the game client software not altering any aspect of the game client software upon receipt of digital or analog inputs identified as unsupported by the input device.
**58.** The method of any one of clauses 53-57 further comprising: the game client software not altering any aspect of the game client software upon receipt of analog inputs identified as within a deadzone value.
**59.** The method of any one of clauses 53-58 further comprising: the game client software not altering any aspect of the game client software upon receipt of analog inputs identified as outside the capabilities of the input device.
   The present disclosure also provides a computer program configured to cause an input device to perform the method of any of clauses 53-59, when executed on one or more processors of the input device.
**60.** A system for pairing an input device to game client software, the system comprising: the input device for: establishing communication with the game client software; providing a first bitmap identifying digital inputs supported by the input device to the game client software; providing a second bitmap identifying analog inputs supported by the input device to the game client software; and transmitting input to the game client software in the form identified by the first bitmap.
**61.** The system of clause 60 wherein the input device is further for: providing capabilities of each of the analog inputs identified by the second bitmap to the game client software, wherein the capabilities are minimum and maximum range values for input from the analog inputs; and identifying deadzone values above and below which triggering events will take place for each of the analog inputs to the game client software.
**62.** The system of any one of clauses 60-61 further comprising the game client software for: designating digital inputs identified as supported by the input device as available for input and digital inputs not identified as supported by the input device as unavailable; designating analog inputs identified as supported by the input device as available for input and analog inputs not identified as supported by the input device as unavailable; and altering an aspect of the game client software in response to receipt of digital and analog inputs identified as supported by the input device.
**63.** The system of any one of clauses 60-62 wherein the game client software is further for: altering an aspect of the game client software according to a default setting upon receipt of digital or analog inputs not identified as supported or unsupported by the input device.
**64.** The system of any one of clauses 60-62 wherein the game client software is further for: not altering any aspect of the game client software upon receipt of digital or analog inputs identified as unsupported by the input device.
**65.** The system of any one of clauses 60-64 wherein the game client software is further for: not altering any aspect of the game client software upon receipt of analog inputs identified as within a deadzone value.
**66.** The system of any one of clauses 60-65 wherein the game client software is further for: not altering any aspect of the game client software upon receipt of analog inputs identified as outside the capabilities of the input device.

### DETAILED DESCRIPTION

### Description of Apparatus

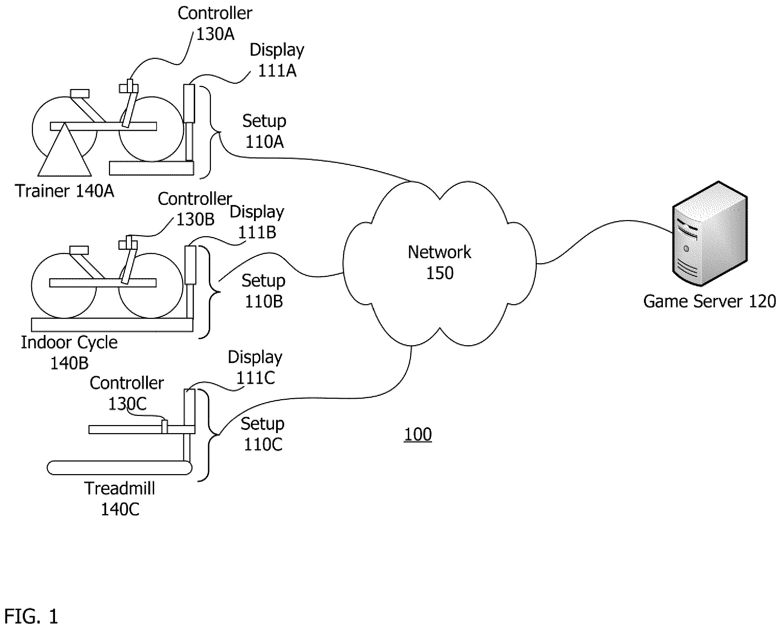

FIG. 1 is an overview of an exercise device communications system 100. The system 100 includes a series of setups 110A, 110B, and 110C, a game server 120, a series of controllers 130A, 130B, and 130C, a trainer 140A, an indoor cycle 140B, and a treadmill 140C, all interconnected by a network 150.

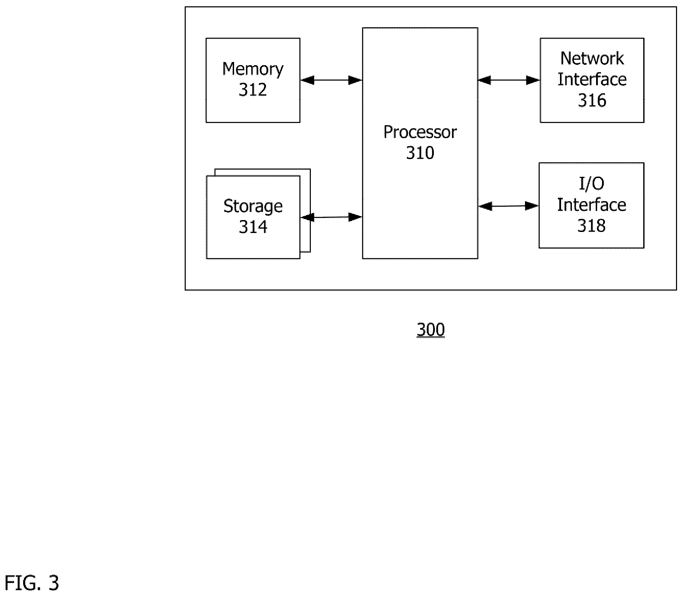

The setup 110A is made up of the display 111A, controller 130A, and trainer 140A. A setup as used herein means a complete set of equipment to engage in exercise. The display 111A is at least a display for showing an ongoing exercise routine, class, or gamified world in which exercise is taking place. Preferably, the display 111A is likewise a computing device (FIG. 3) capable of executing software to enable the exercise routine, class, or gamified world to be displayed. If the display 111A is not itself a computing device, then the display 111A must be in communications with a computing device to accomplish those tasks. The computing device is an integral part of a setup, like setup 110A. And the components of the setup 110A may be mounted on or connected to a bicycle.

The setup 110B is similar to setup 110A except that there is no trainer used. Instead, an indoor cycle 140B is used here. Display 111B and controller 130B are likewise present with similar functions discussed above and below.

The setup 110C is similar to setups 110A and 110B, except a treadmill 140C is used here. Display 111C and controller 130C are likewise present with similar functions discussed above and below.

The game server 120 is a computing device operating software which maintains the state of all connected players (or class participants). The game server 120 preferably enables setups 110A, 110B, and 110C to connect thereto to engage in exercise as directed by the game server 120. The game server 120 may merely serve spinning classes or similar classes in video form as a streaming device (or a plurality of streaming devices). Or, the game server 120 may act very much like a game server in a non-exercise context, enabling authenticated connection by users to engage with a virtual world to which the setups 110A, 110B, and 110C connect to participate. The game server 120 may be a single computing device but is preferably a scalable cloud service with multiple computing devices in various locations throughout the world.

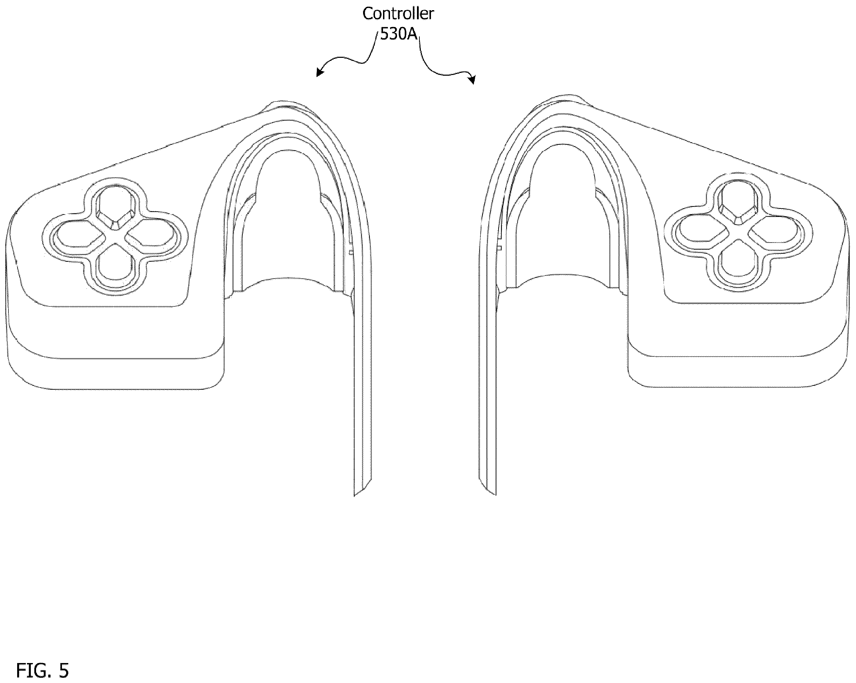

The controllers 130A, 130B, and 130C are remote control devices that operate in conjunction with software operating on the display 111A, 111B, or 111C to control some aspect of the respective setup. Controllers 130A, 130B, and 130C (FIG. 5) operate, for example, to send signals adjusting the resistance applied by the trainer 140A, indoor cycle 140B, or the speed of the treadmill 140C. Controllers 130A-130C may include joysticks or motion controllers and can be used to steer through a virtual world or to select one or more elements within the software operating on the displays 111A-111C.

The trainer 140A is a resistance device that applies resistance (or negative resistance - acceleration) to the setup 110A. The trainer 140A is in communication with the software operating on the computing device (e.g. in the display 111A) to alter the resistance applied as directed by the software. In the case of Zwift, the resistance may be increased as a rider's virtual avatar ascends a hill within the game. Alternatively, the rider's resistance may be decreased as a rider descends a hill, obtains a power-up, or drafts behind another rider. Braking or gear shifts may be simulated - as directed by the software - to correspond to signals indicating those changes. So, for example, the controller 130A may indicate to the software that a gear shift has been entered. If so, the trainer 140A may be directed by the software operating on the display 111A to simulate a gear shift or to actually engage a physical gear shift if a physical set of gears is present.

The indoor cycle 140B and treadmill 140C operate substantially the same as trainer 140, but the indoor cycle 140B is integrated into the setup 110B and the treadmill 140C alters speed and incline, but not resistance, but otherwise operates in a similar manner to the trainer 140A in setup 110A.

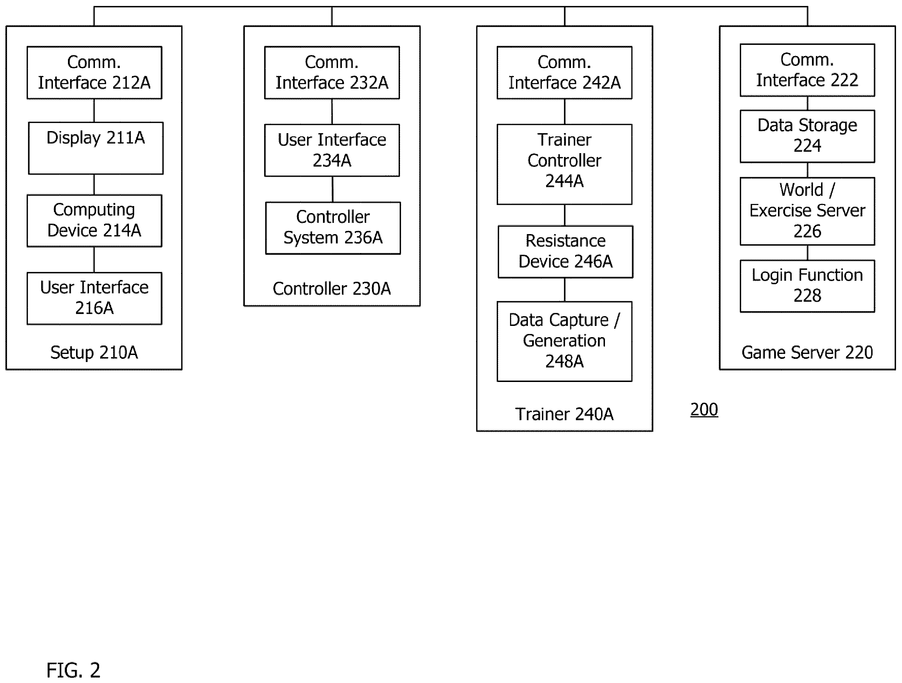

FIG. 2 is a functional diagram of an exercise device communications system 200. The system 200 includes setup 110A shown as setup 210A. System 200 also includes game server 220, controller 130A as controller 230A, and trainer 140A as trainer 240A. The other two setups 110B and 110C would operate similarly to those described in FIG. 2, such as by having a game server 220, controller, and cycle or treadmill, and will not be described separately here.

The setup 210A includes a display 211A as the display 111A, communications interface 212A, a computing device 214A, and a user interface 216A. The communications interface 212A is a software/hardware interface that enables the setup 210A to communicate with the game server 220, controller 230A and the trainer 240A. The particular hardware and/or protocol used for each communication may be different. So, for example, the controller 230A may communicate with the setup 210A using a short range wireless communications protocol such as Bluetooth^{®}, or may be wired (for example, via USB) or may rely upon a local area wireless network protocol such as 802.11x. Other hardware connectivity options are available as well. However, the same communications protocol may be used over whatever hardware channel or carrier is used.

The communications interface 212A relies upon a modified Bluetooth Generic Attribute (GATT) profile. A Service UUID (universally unique identifier) for the new protocol described herein is 00000001-19CA-4651-86E5-FA29DCDD09D1. It is beneficial over existing options such as FTMS (Fitness Machine Service) protocol in including more expandability, greater options for back-and-forth communications, and being more secure, while also lowering overall bandwidth usage. A GATT profile identifies a particular Bluetooth communication transport protocol. If two devices interact that share a GATT profile, then they are able to communicate using that profile once it has been identified and a handshake process has completed.

A protocol described for use herein is configured as a GATT Primary Service having three channels for communication: an asynchronous channel, a synchronous receive (RX) channel and a synchronous transmit (TX) channel. The asynchronous channel is primarily used for notification and therefore uses the NOTIFY property of the Bluetooth GATT profile. The asynchronous channel does not confirm receipt of any data sent using the channel and the data is sent in a stream on an as-needed basis. The RX channel uses the WRITE property of GATT Bluetooth and the RX channel uses the INDICATE property of GATT Bluetooth. These two channels rely upon sending data and expecting confirmations of receipt. Accordingly, only data which requires confirmation is sent using one of these two channels.

The display 211A is described above. Display 211A is primarily to display to a user the ongoing training session or game.

The computing device 214A is preferably a part of display 211A, but in whatever case is in communications with display 211A to provide the ongoing training session or game. This game software or training session may be called a game client software. The computing device 214A may be or store the game client software and a processor for executing that software. The computing device generates a user interface 216A on the display 211A (in the case of a touchscreen) or through other input methods and systems (e.g. buttons, controllers, remote controls, etc.) for the setup 110A.

The game server 220 is a computing device executing software that allows the game server 220 to operate as a communications interface 222, a data storage 224, a world/exercise server 226, and to provide a login function 228. Server 220 may provide a real time exercise and/or gaming experience for the user of the setup 110A and/or trainer 140A.

The communications interface 222 is substantially the same as that described with respect to element 212A above. However, the game server 220 will almost certainly communicate through one or more ethernet cables to an internet pipeline with connectivity to multiple setups, like setup 210A. The data sent and received by the game server 220 using the communications interface 222 is less voluminous than that sent between a setup 210A and controller 230A and trainer 240A, so the communications interface 222 may rely upon traditional TCP/IP datagrams and associated services to communicate with the computing device 214A for a given setup 210A.

The data storage 224 may store such information as the game world environments, textures, and training sessions or competitions to take place in the game world. The data storage 224 may store information about each user (e.g. accomplishments, personal records, etc.) and any competition outcomes involving any users.

The world / exercise server 226 is software operating on a computing device that serves to allow a plurality of setups, like setup 210A, to connect to the game server 220 and engage with the world and engage in exercise. This may be a streaming server of streamed pre-recorded classes for a spinning or running or weight training class. This may be a virtual world to which players connect to use avatars within the game world to move within while engaged in exercise. Various forms of this world / exercise server 226 may be envisioned.

The login function 228 optional and may use the data storage 224 to store authentication information suitable to ensure security of the game server 220 and to ensure that setups, like setup 210A, that connect to the game server 220 have paid an associated membership fee and are otherwise authorized to access the game server 220. The login function 228 may ensure that users are authenticated and are able to access the game server 220.

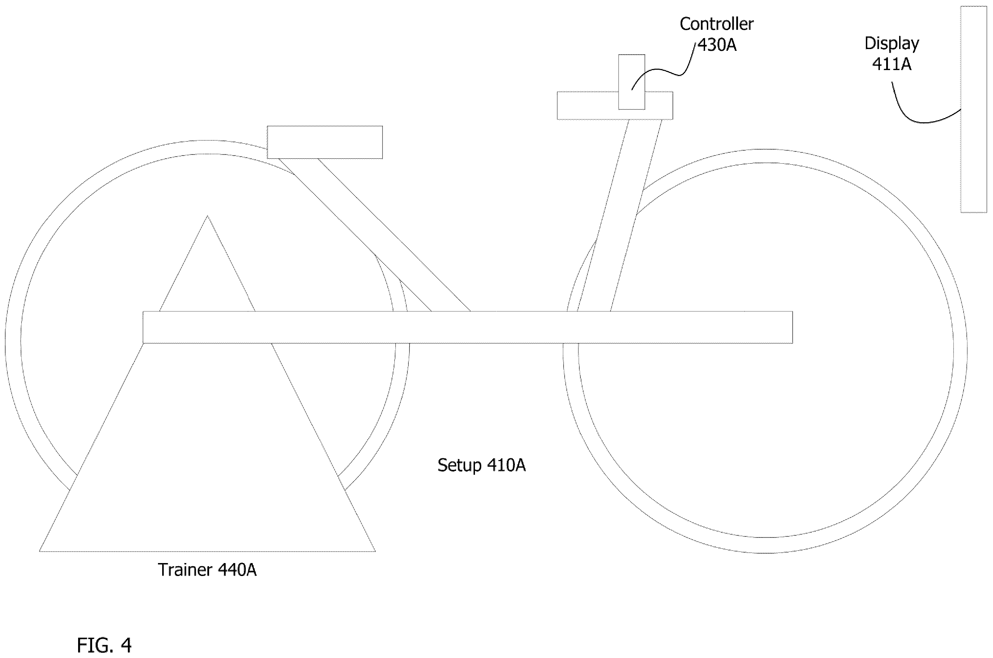

The controller 230A includes a communications interface 232A, a user interface 234A, and a controller system-on-a-chip 236A. The controller 230A is an input device used for providing input to game client software operating on the computing device 214A. The controller 230A may be a handheld controller, a heart rate monitor, a digital watch, one or more buttons, a mobile device such as a mobile phone, or other input device that is capable of interacting with the setup 210A. There may be standard controllers designed specifically to act as input devices for setups like setup 210A, but controllers for other purposes, such as an Xbox^{®} controller, or a Nintendo Switch^{®} controller or generic controllers may also act as input devices like controller 230A. The controller 230A may be a device of FIGs. 4 and/or 5.

The communications interface 242A operates substantially the same as communications interface 212A. However, preferably, the communications interface 232A of the controller 230A acts as a Bluetooth low energy server reliant upon the GATT profile which defines the protocol disclosed herein (referred to herein as a "GATT server"), while the communications interface 212A of the setup 210A operates as the counterpart (referred to herein as a "GATT client") client. The controller may communicate with software executing on the computing device 214A to implement the communications interface 212A to control various functions, including functions of the trainer 240A. Notably, the controller 230A generally does not communicate directly with the trainer 240A, but may communicate indirectly with trainer 240A through the computing device 214A through which it is connected. In other cases, controller 230A may communicate directly with trainer 240A.

The user interface 234A of the controller 230A may be one or more buttons, joy sticks, analog sticks, triggers, motion controls, touchscreen display control implemented in software, or other controls implemented on the controller 230A. In a preferred embodiment, the controller 230A is one or more video game system-like controllers used to engage in specific functions with respect to the game or other software operating on the computing device 214A of the setup 210A. The controller may take the form of a traditional brake lever for a bicycle and/or a traditional gear shift lever, ratchet, or trigger, which may be translated into digital signals transmitted over the communications interfaces 232A, 212A to cause the computing device 214A to instruct the trainer 240A to operate accordingly.

The controller system 236A is a computing device (FIG. 3) responsible for operating as a GATT server and instructing the communications interface 232A what signals to transmit to the setup 210A. In more complex systems, the SoC 236A may perform other functions such as rendering a display, translating touch contact, detecting and interpreting motion of the controller 230A or the like.

The trainer 240A includes a communications interface 242A, a trainer system-on-a-chip 244A, a resistance device 246A, and data capture / generation 248A. The communications interface 242A performs substantially the same function as the communications interface 232A of the controller 230A. As with the controller 230A, the trainer 240A communications interface 242A generally does not communicate directly with any other device except the associated setup 210A communications interface 212A.

The trainer controller 244A is a computing device that operates to intelligently control the trainer 240A as directed by software operating on the setup 210A. The trainer 244A also enables the protocol to be transmitted and received via the communications interface 242A.

The resistance device 246A is a device to add resistance (or negative resistance) to a moving object (e.g. a wheel or axle). The resistance device 246A is described as a "resistance" device, but could merely add speed or simulate weight in the case of pulley-based, weight training. There exist other resistance devices such as air or water resistance (e.g. used in rowing machines), but for a number of reasons eddy current brake is typically the chosen resistance device 246A no matter the type of exercise being simulated.

The data capture / generation 248A may be a part of the trainer SoC 244A, but in general is functions designed to capture the data associated with the ongoing exercise and to send that data (using the communications interface 242A) back to the setup 210A for eventual transmission to the game server 220 to update the game and/or race and/or training session. The types of data captured may be speed, cadence relative to the applied resistance, the amount of force by the user, or similar information. Associated sensors may be used (e.g. force sensors) or the data may be calculated from available variables (e.g. force, speed, cadence, etc.).

Turning now to FIG. 3, a block diagram of a computing device 300 is shown. The computing device 300 may be representative of the server computers, client devices, mobile devices and other computing devices discussed herein. The computing device 300 may include software and/or hardware for providing functionality and features described herein. The computing device 300 may therefore include one or more of: logic arrays, memories, analog circuits, digital circuits, software, firmware and processors. The hardware and firmware components of the computing device 300 may include various specialized units, circuits, software and interfaces for providing the functionality and features described herein. The computing device 300 may be a representation of or include controller 230A, setup 210A, trainer 240A and/or server 220.

The computing device 300 may have a processor 310 coupled to a memory 312, storage 314, a network interface 316 and an I/O interface 318. The processor 310 may be or include one or more microprocessors and application specific integrated circuits (ASICs).

The memory 312 may be or include RAM, ROM, DRAM, SRAM and MRAM, and may include firmware, such as static data or fixed instructions, BIOS, system functions, configuration data, and other routines used during the operation of the computing device 300 and processor 310. The memory 312 also provides a storage area for data and instructions associated with applications and data handled by the processor 310. As used herein, the word memory specifically excludes transitory medium such as signals and propagating waveforms.

The storage 314 may provide non-volatile, bulk or long-term storage of data or instructions in the computing device 300. The storage 314 may take the form of a disk, tape, CD, DVD, SSD, or other reasonably high capacity addressable or serial storage medium. Multiple storage devices may be provided or available to the computing device 300. Some of these storage devices may be external to the computing device 300, such as network storage or cloud-based storage. As used herein, the word storage specifically excludes transitory medium such as signals and propagating waveforms.

The network interface 316 is responsible for communications with external devices using wired and wireless connections reliant upon protocols such as 802.11x, Bluetooth^{®}, Ethernet, satellite communications, and other protocols. The network interface 316 may be or include the internet.

The I/O interface 318 may be or include one or more busses or interfaces for communicating with computer peripherals such as mice, keyboards, cameras, displays, microphones, and the like.

FIG. 4 is an example of an exercise device setup 410A which may be the setup 110A or 210A. The setup 410A includes a display 411A, a controller 430A, and a trainer 440A. Setups 110B and 110C (shown in FIG. 1) may function conceptually the same of setup 410A but are not discussed with reference to FIG. 4 as their functions are not substantially distinct therefrom. The display 411A is shown in front of a rider. The controller 430A may be, for example, attached to the handlebars of the setup 410A. Though shown as a brake or shift controller, the controller 430A may take different forms in different exercises or setups. And, though discussed as a "controller" the same communications protocols may be used with other devices that operate in some sense as a "controller" or input device but may not take that form. For example, the same devices that provide a tilt function for bicycles or treadmills to simulate uphill or downhill rides/runs may in some sense be a "controller" as discussed herein in the sense that they communicate with the computing device 214A of the setup 210A in the same way as a controller, using the same protocols. Automatically controlled fans, side-to-side lean hardware, and other, similar hardware may likewise be a "controller" or input device as disclosed herein, reliant on the same communications protocol.

The trainer 440A is a trainer as discussed above. The trainer 440A may likewise rely upon the same communications protocols described herein.

FIG. 5 is an example of a set of handheld controllers 530A. Here, the controller is designed to sit on handlebars of a bicycle and to provide triggers on the back of the controller, with a traditional "d-pad" controller on the front/top of each controller. Controller 530A can be used on setup 110A, 110B or 110C, Controllers of various forms may be used without departing from the intended scope of the communications protocol used herein or the relay-like functionality of ensuring that the controller 530A communicates with the software operating the game world on the setup 410A, rather than directly with, for example, the trainer 440A.

Other controllers or input devices may take various forms. Preferably, controllers will incorporate both so-called analog and digital input systems. Digital input systems are newer, and simpler to describe. Digital inputs have finite states from 1 to some predetermined maximum. There are a series of discrete values along the way that may be read by a computing device.

Digital systems can mimic traditional analog buttons, having only two options, 1 or 0. These can be used for "on" or "off" inputs. Typical examples are buttons that may be pressed or not-pressed. But, digital systems are flexible, having the capability to have variable states from 0 to virtually any number. These states will be represented by more than simply a 0 or a 1, but may require more complex data structures such as numbers or arrays. Examples of such inputs may be digital controller "sticks" which enable fine control about at least two axes. So, a user may press upward and to the left, but only a little, or as far as possible upward and to the right. These will result in different digital output signals from the stick and such control can be calibrated in-game with different results. For example, in a shooting game, movement of a digital joystick only slightly up and to the left may result in the in-game camera slowly moving in the direction identified by the digital input. In contrast, movement all the way up and to the right may result in fast movement of the in-game camera in the same direction. Digital inputs are simpler for computers to interact with, because they generate and operate using discrete numerical forms that the computer expects.

Analog inputs can be represented electrically as a continuous waveform. Analog inputs may be on/off switches such as buttons. In such a case, a threshold is set for the point at which "off" becomes "on" and vice versa. However, because analog inputs are continuous, a single-axis joystick may be continuously variable from zero to some maximum voltage. These are harder for the computer to understand, because the continuous waveforms are not necessarily discrete values. They must therefore be converted into binary in some form before the computer may process them. But, analog inputs are preferred in certain cases because they provide literally infinite potential values within their operative range. A volume knob in an older stereo is another example of an analog input with numerous discrete values along its continuous waveform.

Because analog inputs are continuous, properly mapping them to an expected digital operation or process can be cumbersome. The digital receiver needs to know the lowest expected value, the highest expected value, and any values in between that are to be registered as separate values, as well as the distance, along the lowest to highest value continuum, that should be disregarded as not a new value. In particular, analog has the potential to result in near-continuous communication between the sender and receiver of the ever-changing values, even when there is little or no change in the analog values. This near-continuous communication can result in overloaded communications channels and sluggish responsiveness from analog inputs.

An input device such as a controller may utilize both digital and analog inputs. In certain types of inputs, particularly joystick-like inputs, analog controls can be preferred for their precision. But, as a result, pairing an unknown input device with a setup or game client software may present a problem. Without a robust pairing process, the receiving software cannot know the meaning of any given input signal and cannot know how to interpret continuously variable analog inputs in particular.

### Description of Processes

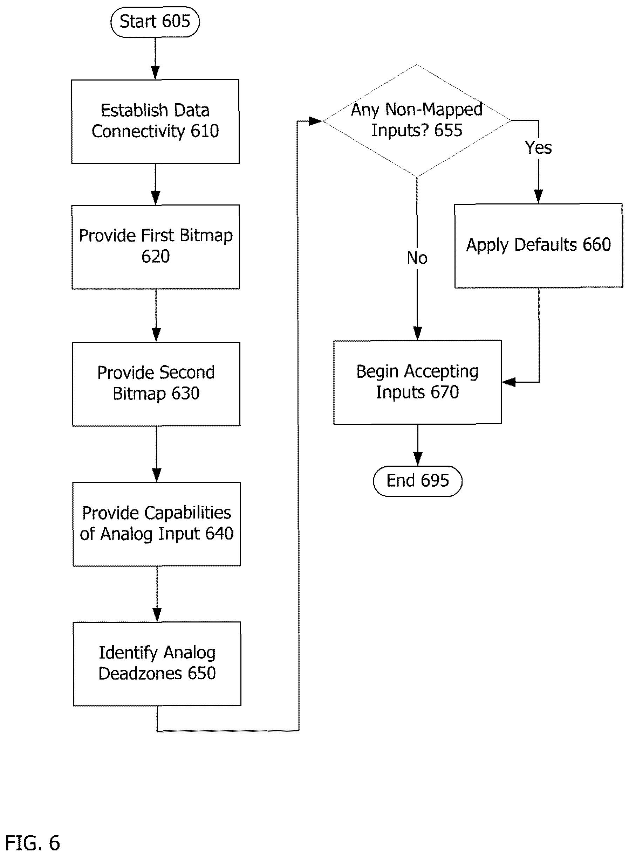

FIG. 6 is flowchart of a process of performing input device pairing and input mapping. The process may take place each time a new input device (e.g. a controller), such as controller system 236A or controller 230A is paired to a game software client, such as device 214A or setup 210A. And, though this process is intended for an input device such as a generic exercise device or gaming controller, it may be possible to use the same or a similar process to pair other devices (e.g. trainers, treadmills, rowers, displays, etc.).

Following the start 605, the process begins with establishing data connectivity at 610. Here, the most basic level of communication between the input device and the game software client is begun and completed as discussed in the parent application serial number 18/334,105 filed June 13, 2023 and described in the protocol described with reference to FIG. 2 above. This process is necessary to enable further communications to take place. In this process, the connecting device is generally in the position of the "server" with the game client software acting as "client" to the input device server. This configuration is used, among other reasons, because the input device is generally in the position of providing data to the game client software to do something, update a setting, or otherwise have the game client software respond to data from the input device. In some cases, the client software reads or pulls the data from the input device.

Once basic communication has been negotiated between the input device and the game client software, a first bitmap is provided and mapped at 620. The first bitmap is a bitmap identifying digital inputs supported by the input device. So, for example, a given input device may have a plurality of digital inputs including multiple buttons, scroll wheels, joysticks, bumper buttons, triggers (e.g. having variable positions from entirely open to entirely closed), trackpads, roller balls, and the like. There exist numerous types of digital inputs that a given input device may have, and each of these inputs may be identified by the first bitmap. Each of these inputs may be identified by a single integer. This first bitmap is a bit-by-bit array having a structure of a multidimensional array bitmap structure. Other bitmap-like structures are also possible (e.g. a two- or many-dimensional array). Or, in some cases, the bitmap may be an integer of sufficient size that it corresponds to a particular set of 1s and 0s in a larger data structure (e.g. a two-dimensional array) representative of the bitmap. Other formats for passing this data as a bitmap are possible.

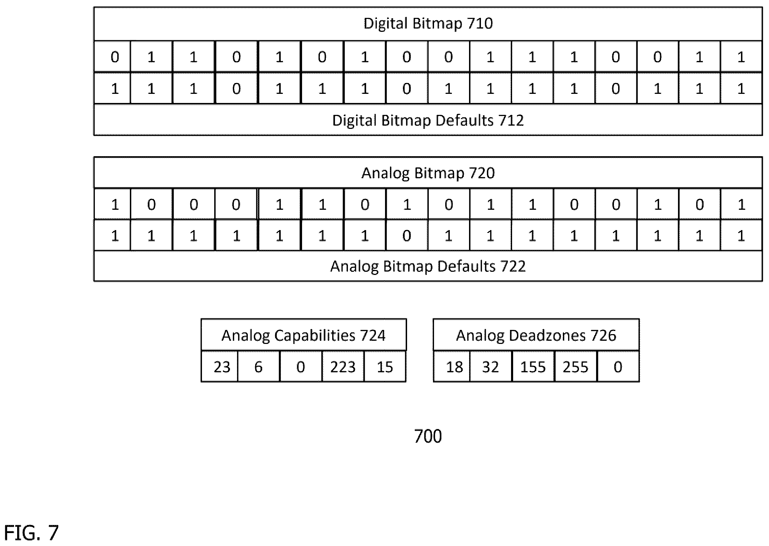

The first bitmap is provided to the game client software and defines either "yes" or "no" (represented by 1 or 0 in the bitmap) for each supported digital input available on the input device. So, for example, the bitmap may indicate that the input device includes eight digital buttons, one scroll wheel, and one joystick; each of them being in a digital format. These are represented by a 1 appearing in a relevant position within the first bitmap. All other positions within the first bitmap are left as 0, indicating that those digital inputs are not present. A simplified two-dimensional array is shown in FIG. 7 as digital bitmap 710. A much more complex bitmap is more likely.

Table 1 below shows the field and its description in the relevant protocol format.

**Table 1**

| **Field** | **Description** | |
|---|---|---|
| supportedDitigalInputs | Bitmap to indicate to the client which digital inputs are supported by the device, where: | |
| | | • Bit ***n***: 0 → Digital input ***n*** is not supported and should be ignored |
| | | • Bit ***n***: 1 → Digital input ***n*** is supported and should be processed when received |

If there is no data provided by the input device, or if only some digital inputs are provided and others appear to be in use by the input device, then a set of default values may be used by the game client software for the digital inputs that appear to be in use. And, in cases where a first bitmap input bit is provided by the input device to the game client software but has been identified as not a digital input device that is supported based upon the digital bitmap, then the game client software will ignore input from that non-supported digital input device. Though described as a "first" bitmap, the order for delivery of the first and second bitmap, discussed below, is not particularly important. In some cases, providing the first bitmap is or includes the client software reading or pulling the first bitmap from the input device, such as from a known location in the memory of the input device.

Next, the second bitmap is provided and mapped at 630. This second bitmap describes the available analog inputs available or present on the input device. As with the digital input bitmap, the analog input bitmap preferably takes the form of a multidimensional array of 1s and 0s where a 1 indicates that a particular analog input is present on the input device and a 0 indicates that a particular analog input is not present on the input device. A simplified two-dimensional array is shown in FIG. 7 as analog bitmap 720. A much more complex bitmap is more likely. Default settings may be applied in a similar way to those for digital inputs for analog inputs that appear to be in use. In cases where a second bitmap input bit is provided by the input device to the game client software but has been identified as not an analog input device that is supported based upon the second digital bitmap, then the game client software will ignore input from that non-supported analog input device. Other characteristics of the second bitmap's form or possible form are discussed above with respect to the first bitmap and will not be repeated here. In some cases, providing the second bitmap is or includes the client software reading or pulling the second bitmap from the input device, such as from a known location in the memory of the input device.

Table 2 below shows the field and its description in the relevant protocol format.

**Table 2**

| **Field** | **Description** | |
|---|---|---|
| supportedAnalogInputs | Bitmap to indicate to the client which analog inputs are supported by the device, where: | |
| | | • Bit ***n***: 0 → Analog input ***n*** is not supported and should be ignored |
| | | • Bit ***n***: 1 → Analog input ***n*** is supported and should be processed if received |

Next, the capabilities of the analog inputs identified in step 630 are provided as an array at 640. The capabilities are provided by the input device to the game client software in an array of data objects, one array may be used for each analog input, that identifies the analog input's sensor ID, identifying the particular analog input to which it pertains, along with a minimum and maximum analog value that is to be expected for that analog input. For example, in the case of an analog scroll-wheel, the scroll-wheel may have increased voltage over a constant minimum without interaction (which may be zero) which may barely register at all to fully scrolled to its maximum. The game client software is provided this information so that it can properly interpret analog inputs from analog systems with which it may have no familiarity otherwise. When given the minimum and maximum of a given range, the game client software may then scale its own expected behavior from the range beginning at the minimum and ending at the maximum. An example of analog capabilities for a single analog input is shown in FIG. 7 with each byte represented as a number from zero to 255 as analog capabilities 724. In some cases, for the analogue input capabilities there are two data objects. One for the analogue input range and another one for the deadzone. Each of the objects may be an array. For the analogue input range, the elements in the array contain at least the following data: Sensor Identification, Minimum Analogue Value, and Maximum Analogue Value. For the analogue deadzone the elements in the array contain the following data: Sensor Id, Negative deadzone value, and Positive deadzone value. In each case the resulting data arrays would then be serialised before transmission. Other ways of representing this data are possible. In some cases, providing the capabilities is or includes the client software reading or pulling the capabilities from the input device, such as from a known location in the memory of the input device.

Table 3 below shows an example of the field and its description in the relevant protocol format, such as for capabilities 724.

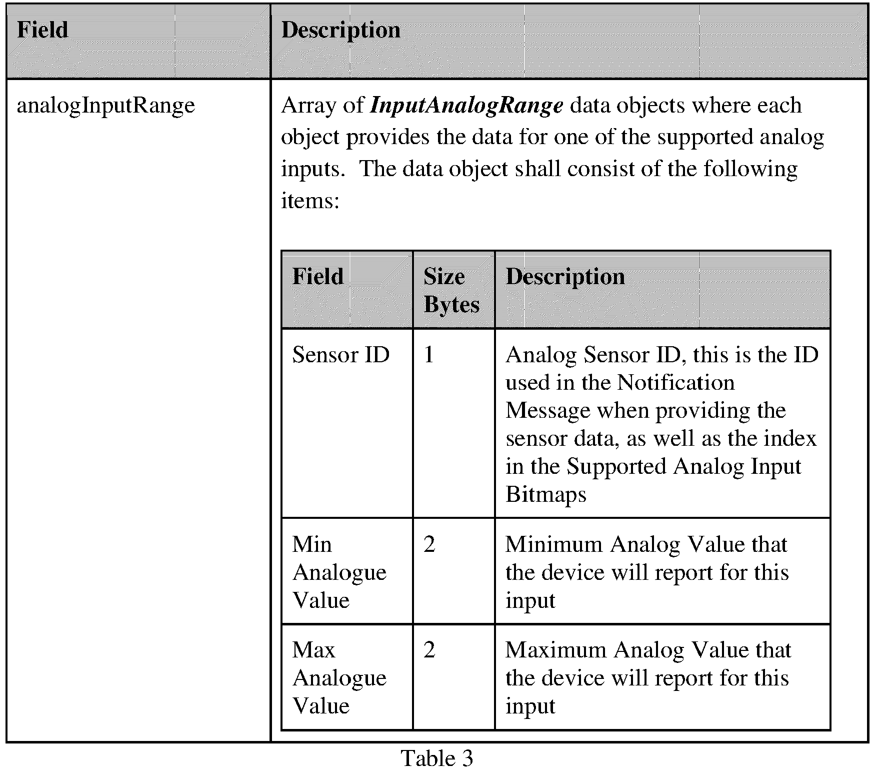

Finally, the deadzones for each analog input are provided as an array at 650. Because analog inputs are continuously variable, the game client software needs to be made aware of the values at which input from a user will be registered and will not be registered. This generally defines two thresholds, an upper bound and a lower bound which, when crossed by input from a user of an analog input, will result in that input being registered and sent by the input device to the game client software. There may be one or more negative deadzone values above which and a positive deadzone values below which the input should not be registered. The game client software may need to be aware of these values so that it can properly calibrate in-game functions or reactions. And, having these deadzones where input does not result in the input device communicating with the game client software reduces communications between the input device and the game client software to conserve battery power and communications bandwidth for other purposes or signals. An example of analog deadzone data for a single analog input is shown as a group of five bytes in FIG. 7 as analog deadzones 726. In some cases, providing the deadzones is or includes the client software reading or pulling the deadzones from the input device, such as from a known location in the memory of the input device.

Table 4 below shows the field and its description in the relevant protocol format, such as for deadzones 726.

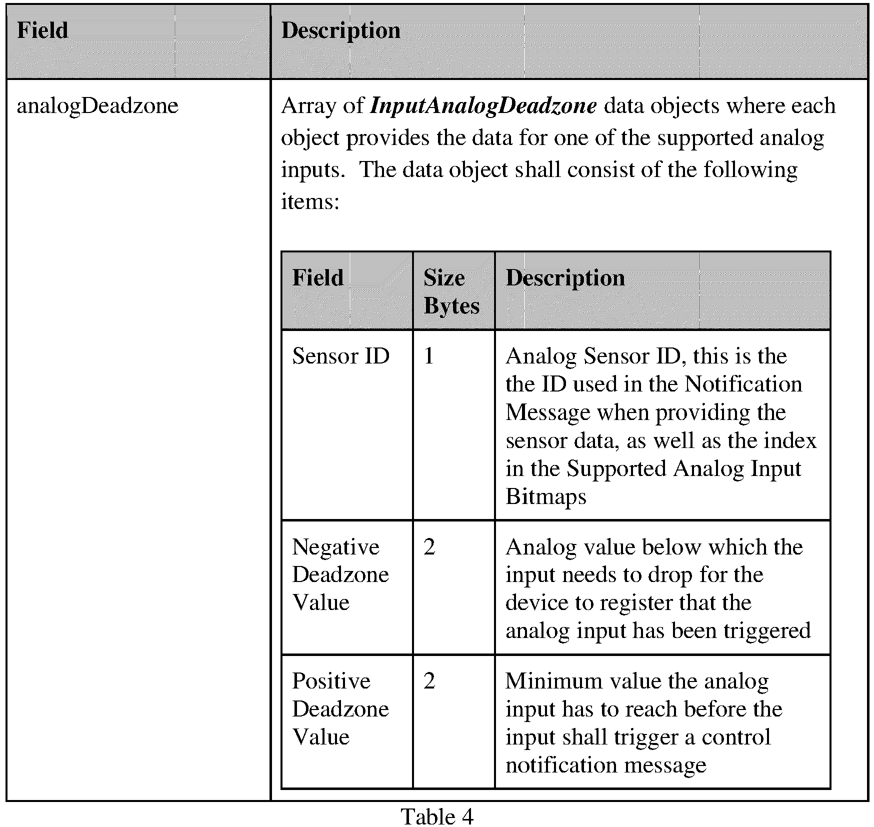

If there are any non-mapped inputs ("yes" at 655), then the defaults are applied at 660. Here, the default settings for analog and digital inputs are applied. This is a fall-back option in case of a malformed first or second bitmap or in case the input device fails to communicate properly with the game client software. In such a case, there are defaults for all typical or standard digital and input functions, as well as minimum and maximum values and deadzones for all analog inputs. Accordingly, the game client software can attempt to function with input devices that may not inform the game client software or may improperly inform the game client software of its capabilities and available inputs. After 650, the process continues with beginning to accept inputs at 670.

If there are not any non-mapped inputs ("no" at 655) or after any defaults are applied, the process continues with beginning to accept inputs at 670. At 670, the controller or other input device operates to provide input to the game client software and the game client software responds according to the information it obtained from the pairing and mapping process described above. This may go on until the input device is disconnected or another input device is connected and the pairing process begins again.

After 670, the process may end at 695. In other cases, after 670 the process returns to 610, 620 or 630.

FIG. 7 is an example of a set of data structures 700 used in pairing and input mapping. The digital bitmap 710, discussed briefly above, is a bitmap that operates to identify the available digital inputs on a given input device. The digital bitmap 710 is provided as a part of the pairing process by the input device to the game client software, such as at 620.

A set of digital bitmap defaults 712 are shown as being a part of the digital bitmap 710, but in reality these may be stored on the game client software to be applied when the digital bitmap 710 is not complete or none is provided. The digital bitmap defaults 712 are shown here to indicate that they exist in the background as a fallback option for the game client software.

An analog bitmap 720 is a bitmap that operates to identify the available analog inputs on a given input device. The analog bitmap 720 is provided as a part of the pairing process by the input device to the game client software, such as at 625.

A set of analog bitmap defaults 722 are shown as being a part of the analog bitmap 720, but in reality, these may be stored on the game client software (e.g. as part of the setup or controller) to be applied when the analog bitmap 720 is not complete or none is provided. The analog bitmap defaults 722 are shown here to indicate that they exist in the background as a fallback option for the game client software.

The analog capabilities 724 are the limits (e.g. maximum value and minimum value) of the capabilities of a given analog input. The analog capabilities 724 shown are for a single analog input represented by the analog bitmap 720. In a typical case, more than a single analog input will be present. More likely, the analog capabilities will be a two-dimensional array five bytes wide and with each row representing a different of the analog inputs, identified by its sensor ID.

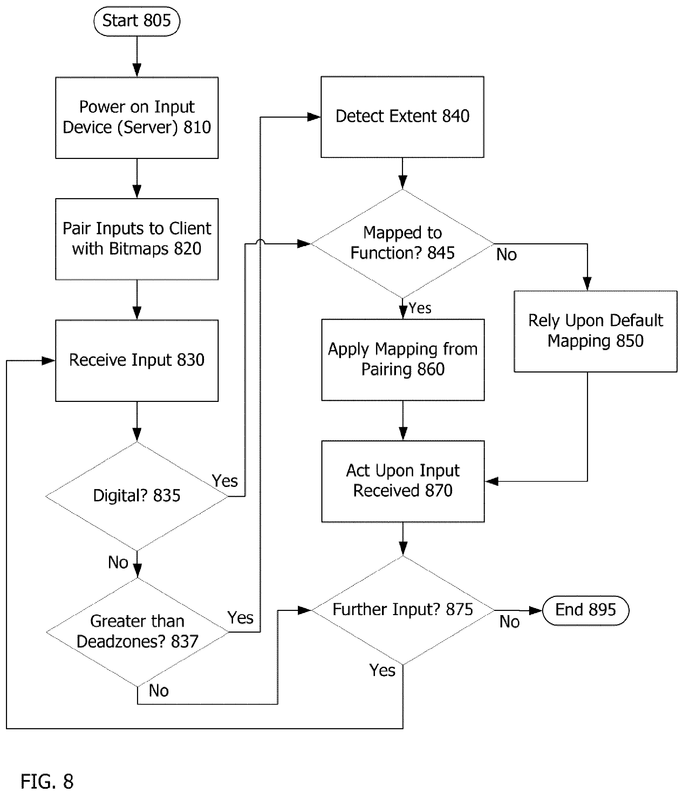

FIG. 8 is a flowchart for a process of handshaking and processing to input controller device input. The process shows a way in which an input device and game client software operate together to pair and process input. The process begins at start 805 and ends at 895, but it may continue or return to 830 so long as an input device is paired, or a given game client software may be paired with multiple input devices at once in which case multiple of these processes may be taking place simultaneously.

Following the start at 805, the process begins with powering on the input device (server) at 810. As discussed above, the input device (e.g. a controller) operates as a server to serve pairing an input data to the game client software. So, its first step is powering the input device on to begin operating as a server and the pairing process.

Next, the pairing inputs are mapped to the client with the two bitmaps (one digital, one analog) at 820. This is discussed above with respect to FIGs. 6-7. Here, the input device (server) makes the game client software (client) aware of the available digital and analog inputs on the input device (e.g. a game controller) and provides the data regarding the capabilities and the deadzones for the analog inputs. Thereafter, the input device and game client software are paired and mapped. In some cases, the input device (e.g., acting as a server) making the game client software (e.g., acting as client) aware of the available digital and analog inputs on the input device (e.g. a game controller) and providing the data regarding the capabilities and the deadzones for the analog inputs is or includes the client software reading or pulling this data from the input device, such as from a known location in the memory of the input device.

Next, input is received at 830 by the input device. This could be a button depressed or an analog or digital joystick moved by some amount. Because the input device detects all inputs, however small, the next step is to determine whether it is a digital input ("yes" at 835) or an analog input ("no" at 835).

If the input is analog ("no" at 835), then the process continues on the input device to determine if the input is greater than or outside of the deadzones for the analog input for which the input was received ("yes" at 837). If not ("no" at 837), then further input is awaited at 875. If the input is greater than or outside of the deadzones ("yes" at 837), meaning that the analog input received exceeds a predetermined threshold (maximum or minimum) to qualify for a change in status of the input, then the extent of the change is detected at 840. This step is necessary because for some analog inputs, the deadzones may in fact be a single deadzone. For example, for a button, there may be a single threshold under which no button press is detected and above which a button press is detected. But, for other analog inputs, such as a joystick, there may be a plurality of deadzones between variations in tilt of the joystick such that there are multiple intermediate points along a path to a maximum value or a minimum value for a joystick.

In such a case, the extent of the input's movement or position must be detected at 840. In the case of a button push, it may merely be that it has been pressed or has not been pressed. In the case of a joystick or scroll wheel, this may be a detection of the extent of the movement or the absolute position of the movement relative to a maximum or minimum for that input.

After the extent is detected at 840 or if the input detected at 830 was digital ("yes" at 835), then process continues with determining whether the input detected is mapped to a function or not at 845. Digital inputs need no extent detection because they provide output in digital form already which includes their absolute value. The mapping detection is based upon the mapping (e.g. second bitmap) provided by the digital or analog bitmaps transmitted by the input device to the game client software at 820. Here, a determination is made whether there is a mapping for that input received at all. This is done by the game client software after pairing and receipt of input from the input device at the game client software.

In some cases, there may be no mapping at all ("no" at 845) in which case the default mapping may be applied at 850. Here, the game client software falls back to a default setting for an input of the type that was not mapped in the digital or analog bitmap during the handshake pairing process.

If the input is mapped to a function ("yes" at 845), then the mapping made during the handshake pairing process is applied by the game client software at 860.

Thereafter, the game client software may act upon the input received at 870, causing changes in the game client software, the user of the game client software's status or otherwise cause some change within the game client software in response to the input received.

The system may then await further input at 875. If more input is received ("yes" at 875), then process continues at 830. Alternatively, the process may continue at 810 or 820. If no further input is received ("no" at 875), then the process may then end at 895. This may be terminating the game client software's operation temporarily, unpairing the input device, or may be triggered by a timeout of no input for a predetermined period of time after which the input device and/or game client software may cease to expect input. Alernatively, the process may continue at 810 or 820.

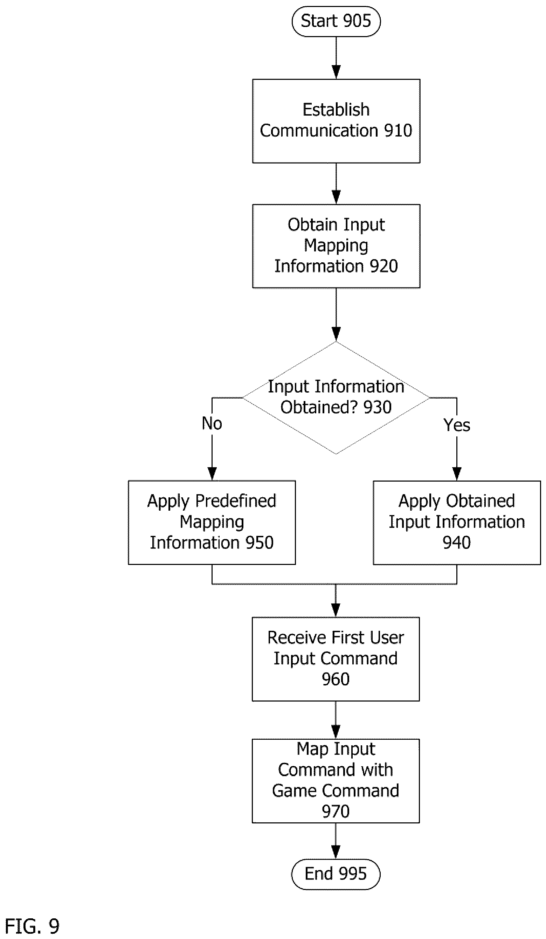

FIG. 9 is flowchart of a process of performing pairing of an input device for use in conjunction with game device. The input device may be or include one or more input means and configured to output, when one of the input means is actuated, a user input command corresponding to the actuated input means and the game device being responsive to one or more game commands. The process may be performed by the game software.

The process shows a way in which an input device and game client software operate together to pair and process input. The process begins at start 905 and ends at 995, but it may continue or return to 910, 920 or 960 so long as an input device is paired, or a given game client software may be paired with multiple input devices at once in which case multiple of these processes may be taking place simultaneously. The process may take place each time a new input device (e.g. a controller), such as controller system 236A or controller 230A is paired to a game software client, such as device 214A or setup 210A. And, though this process is intended for an input device such as a generic exercise device or gaming controller, it may be possible to use the same or a similar process to pair other devices (e.g. trainers, treadmills, rowers, displays, etc.).

Following the start at 905, the process begins with the input device and the game device establishing communication with each other at 910. The establishment of the communication may in some cases be initiated by the game while in other cases it may be initiated by the input device. This may include steps discussed for FIGS. 6-8, such as steps 610 or 810.

Next, at 920 the game device is attempting to obtain input mapping information from the input device using predefined location information. This may include steps discussed for FIGS. 6-8, such as steps 620-630 or 820.

Next, at 930 the game device is determining what to use as selected mapping information. At 930, if the game device attempting to obtain input mapping information is successful ("yes" at 930), the obtained input mapping information is used as selected mapping information at 940. At 930, if the game device attempting to obtain input mapping information is unsuccessful ("no" at 930), predefined mapping information is used as selected mapping information at 950. Steps 930-950 may include steps discussed for FIGS. 6-8, such as steps 655-660 or 835-860.

After step 940 or 950, at 960 the game device receives a first user input command from the input device. This may include steps discussed for FIGS. 6-8, such as steps 670, 830 or 875.

At 960 the game device receives a first user input command from the input device. This may include steps discussed for FIGS. 6-8, such as steps 670, 830 or 875.

At 970, responsive to receiving the first user input command, the game device mapping, using the selected mapping information, the first user input command with a first game command of the one or more game commands. This may include steps discussed for FIGS. 6-8, such as steps 655-660 or 835-860.

### Closing Comments

Throughout this description, the embodiments and examples shown should be considered as exemplars, rather than limitations on the apparatus and procedures disclosed or claimed. Although many of the examples presented herein involve specific combinations of method acts or system elements, it should be understood that those acts and those elements may be combined in other ways to accomplish the same objectives. With regard to flowcharts, additional and fewer steps may be taken, and the steps as shown may be combined or further refined to achieve the methods described herein. Acts, elements and features discussed only in connection with one embodiment are not intended to be excluded from a similar role in other embodiments.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of the listed items.

## Claims

1. A method of pairing an input device for use in conjunction with an exercise device, the method comprising:
the input device establishing communication with game client software;
the input device providing a first bitmap identifying inputs supported by the input device to the game client software; and
the input device transmitting input to the game client software in the form identified by the first bitmap.

2. The method of claim 1 wherein the first bitmap identifies digital inputs supported by the input device to the game client software and further comprising:
the input device providing a second bitmap identifying analog inputs supported by the input device to the game client software.

3. The method of claim 2 further comprising the input device identifying capabilities of each of the analog inputs identified by the second bitmap to the game client software.

4. The method of claim 3 wherein the capabilities are minimum and maximum range values for input from the analog inputs.

5. The method of any of claims 2 to 4, further comprising the input device identifying deadzone values above and below which triggering events will take place for each of the analog inputs.

6. The method of any of claims 2 to 5, further comprising the game client software:
identifying bits that should be considered input from the input device and bits that should not be considered input from the input device;
setting the minimum and maximum range values at which an analog input will be detected; and
processing the deadzone values to minimize communication between the game client software and the input device.

7. The method of any of claims 2 to 6 wherein when the first or the second bitmap do not identify one or more digital or analog inputs, the game client software relies upon a default setting for a particular input.

8. An input device, comprising a processor and memory for executing a pairing process with game client software, the input device being configured to:
establish communication with the game client software;
provide a first bitmap identifying inputs supported by the controller to the game client software; and
transmit input to the game client software in the form identified by the first bitmap.

9. The input device of claim 8 wherein the first bitmap identifies digital inputs supported by the input device to the game client software and further wherein the input device is configured to:
provide a second bitmap identifying analog inputs supported by the input device to the game client software.

10. The input device of claim 9 wherein the input device is further configured to identify capabilities of each of the analog inputs identified by the second bitmap to the game client software,
optionally wherein the capabilities are minimum and maximum range values for input from the analog inputs.

11. The input device of claim 9 or claim 10 wherein the input device is further configured to identify deadzone values above and below which triggering events will take place for each of the analog inputs.

12. The input device of any of claims 9 to 11 wherein the input device is further configured to:
transmit bits within a range of supported analog input bits that should not be considered input from the input device;
transmit analog input bits within minimum and maximum range values at which an analog input will be detected by game client software; and
ignore deadzone values to minimize communication between the input device and the game client software.

13. The input device of any of claims 9 to 12 wherein when the first or the second bitmap do not identify one or more digital or analog inputs, the input device and game client software are configured to rely upon a default setting for a particular input.

14. A system comprising a computing device operating as a server using server software, the server software executing instructions to cause a processor of the computing device to:
establish communication with game client software;
provide a first bitmap identifying inputs supported by the computing device to the game client software; and
transmit input to the game client software in the form identified by the first bitmap.

15. A computer program configured to cause, when executed, one or more processors:
establish communication with game client software;
provide a first bitmap identifying inputs supported by the input device to the game client software; and
transmit input to the game client software in the form identified by the first bitmap.
